# EUROPEAN PATENT APPLICATION

(11) **EP 1 708 106 A1**
(43) Date of publication of application: **04.10.2006**
(21) Application number: 06111669.5
(22) Date of filing: 24.03.2006
(51) Int. Cl.: G06F 17/30

(54) **Associating advertisement information with network-based content locations**

(30) Priority: 30.03.2005 US 93508
(71) Applicant: MICROSOFT CORPORATION, Redmond, Washington 98052-6399 (US)
(72) Inventor: Brill, Eric D., Redmond, WA 98052 (US); Richardson, Matthew R., Redmond, WA 90852 (US)
(74) Representative: Zimmer, Franz-Josef

(57) **Abstract**

The subject invention leverages a locating means, such as, for example, Internet addresses to provide supplementary information based on the location of network content. This allows additional information to be disseminated with the content without requiring the content itself to be modified to contain the supplementary information. By providing locating means association-based supplementary information, the subject invention permits supplementary information such as, for example, advertising, notes, and chats and the like to be relayed to a user along with the desired unaltered content such as, for example, with a web page. In one instance of the subject invention, advertisements are associated with Internet URLs, allowing advertisers to purchase associations that they deem beneficial to their businesses. In another instance of the subject invention, a function of the locating means is utilized to provide a set of locations to associate supplementary information with.

## Description

### TECHNICAL FIELD

The subject invention relates generally to information dissemination, and more particularly to systems and methods for associating supplementary information with locations of content on a network.

### BACKGROUND OF THE INVENTION

The evolution of computers and networking technologies from high-cost, low performance data processing systems to low cost, high-performance communication, problem solving and entertainment systems has provided a cost-effective and time saving means to lessen the burden of performing every day tasks such as correspondence, bill paying, shopping, budgeting and information gathering. For example, a computing system interfaced to the Internet, *via* wire or wireless technology, can provide a user with a channel for nearly instantaneous access to a wealth of information from a repository of Web sites and servers located around the world, at the user's fingertips.

Typically, the information available *via* Web sites and servers is accessed *via* a Web browser executing on a Web client *(e.g.,* a computer). For example, a Web user can deploy a Web browser and access a Web site by entering the Web site Uniform Resource Locator (URL) *(e.g.,* a Web address *and*/*or* an Internet address) into an address bar of the Web browser and pressing the enter key on a keyboard or clicking a "go" button with a mouse. Access is facilitated by a protocol (a language for computers to communicate with each other) that indicates a set of rules and standards for the exchange of information, a location to the Web site, a name of an organization that maintains the Web site, and a suffix (*e.g.*, com, org, net, gov and edu) that identifies the type of organization. Alternatively, the user can enter keywords into a general search engine, which will search the entirety of the World Wide Web or other collection of sites *(e.g.,* intranet) and return sites that it determines to be related to the keywords. A user can then select one of the search results in order to view that Web page.

The Web page itself contains "content" or information that a user might be seeking. Thus, the URL is utilized as a means to locate information *via* the Internet or other network. When a user continually looks for information by selecting Web pages, it is known as "browsing" or, sometimes, as "surfing the net." The browser window displays the Web page content and typically provides some types of Web browsing controls such as forward, back, and stop, *etc.,* relating to control of the Web content window. The browser window does not, however, provide any additional information regarding the selected Web page. Often, especially businesses which advertise, it is desirable to associate additional information, such as advertisements, with a selected Web page without requiring the information to be part of the Web page content. This would allow the additional information to be disseminated without altering the actual Web page.

### SUMMARY OF THE INVENTION

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

The subject invention relates generally to information dissemination, and more particularly to systems and methods for associating supplementary information with network content locations. Locating means, such as, for example, Internet addresses are leveraged to provide supplementary information based on the location of network content. This allows supplementary information to be disseminated with the content without requiring the content itself to be modified to contain the information. By providing locating means association-based supplementary information, the subject invention permits information such as, for example, advertising, notes, and chats, and the like to be relayed to a user along with the desired unaltered content such as, for example, with a web page. In one instance of the subject invention, a function based on the locating means is utilized to provide a set of locations to associate supplementary information with. This allows supplementary information to be associated with locations that possess some relationship between their locations rather than with traditional content-based associations such as, for example, key words found on a Web page. In other instances of the subject invention, a function of the locating means along with additional parameters, such as, for example, specific desired content *(e.g.*, key words) can be utilized to further filter the location-based associations of supplementary information. In another instance of the subject invention, advertisements are associated with URLs, allowing advertisers to purchase associations that they deem beneficial to their businesses. Thus, the subject invention significantly enhances the dissemination of information *via* association of the supplementary information with network content locations, allowing the contents to remain unchanged while providing additional information related to the content location, often generating revenue in the process.

To the accomplishment of the foregoing and related ends, certain illustrative aspects of the invention are described herein in connection with the following description and the annexed drawings. These aspects are indicative, however, of but a few of the various ways in which the principles of the invention may be employed and the subject invention is intended to include all such aspects and their equivalents. Other advantages and novel features of the invention may become apparent from the following detailed description of the invention when considered in conjunction with the drawings.

### BRIEF DESCRIPTION OF THE DRAWINGS

FIG. 1 is a block diagram of a supplementary information association system in accordance with an aspect of the subject invention.
FIG. 2 is another block diagram of a supplementary information association system in accordance with an aspect of the subject invention.
FIG. 3 is a flow diagram of a method of facilitating supplementary information association with network content locations in accordance with an aspect of the subject invention.
FIG. 4 is a flow diagram of a method of facilitating advertisement association with network content locations in accordance with an aspect of the subject invention.
FIG. 5 is a flow diagram of a method of facilitating remuneration for advertisement association with network content locations in accordance with an aspect of the subject invention.
FIG. 6 illustrates an example operating environment in which the subject invention can function.
FIG. 7 illustrates another example operating environment in which the subject invention can function.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention may be practiced without these specific details. In other instances, well-known structures and devices are shown in block diagram form in order to facilitate describing the subject invention.

As used in this application, the term "component" is intended to refer to a computer-related entity, either hardware, a combination of hardware and software, software, or software in execution. For example, a component may be, but is not limited to being, a process running on a processor, a processor, an object, an executable, a thread of execution, a program, *and*/*or* a computer. By way of illustration, both an application running on a server and the server can be a computer component. One or more components may reside within a process *and*/*or* thread of execution and a component may be localized on one computer *and*/*or* distributed between two or more computers. A "thread" is the entity within a process that the operating system kernel schedules for execution. As is well known in the art, each thread has an associated "context" which is the volatile data associated with the execution of the thread. A thread's context includes the contents of system registers and the virtual address belonging to the thread's process. Thus, the actual data comprising a thread's context varies as it executes.

The subject invention provides instances of systems and methods that allow supplementary information to be associated with locations of content found on a network. This allows additional information to be relayed to a user when a content location is accessed. The association can link supplementary information to multiple locations as well, and those locations can be selected based on a function of the content locating means. Thus, in one instance of the subject invention, Internet URLs are utilized as the content locating means and advertisements are associated with Web pages based on a function of the URLs. A user can then view *and*/*or* listen to an advertisement when they access a particular URL *and*/*or* set of URLs associated with that advertisement. The subject invention also provides instances that allow advertising purchasing schemes to be utilized in conjunction with the associations of the content locating means. This allows businesses to tie their advertisements to Web addresses that are more likely to generate customers *and*/*or* to increase brand awareness. The advertisements themselves can include, but are not limited to, inducements to purchase *and*/*or* sell, inducements to utilize *and*/*or* abstain from a service, *and*/*or* a representation to increase brand awareness and the like. By allowing associations with content locating means, additional information can also be presented to a user when the content is accessed such as, for example, chat discussions, form data, and additional hyperlinks and the like. Criteria for selecting desired content locations can also be based on a function of the locating means that includes, for example, key words on a Web page, particular form data entered on a Web page, search terms entered on a Web page, and general content of a Web page and the like.

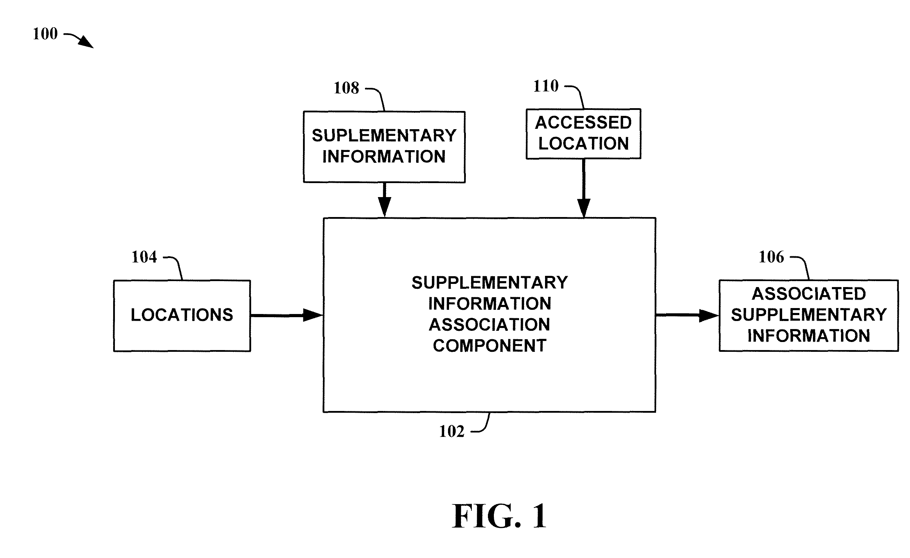

In FIG. 1, a block diagram of a supplementary information association system 100 in accordance with an aspect of the subject invention is shown. The supplementary information association system 100 is comprised of a supplementary information association component 102 that receives locations 104 and provides associated supplementary information 106 when appropriate. Supplementary information 108 is obtained and associated with at least one desired location from the received locations 104. The supplementary information association component 102 relays the associated supplementary information 106 when it receives an accessed location 110 that conforms to a desired location. In one instance of the subject invention, the desired location is determined based on a function of a locating means. Thus, the desired location can be comprised of multiple locations related by the function. For example, the locating means can be a URL for the Internet, and the function can be all URLs that contain "dog." Therefore, the supplementary information 108 is associated with all "dog" containing URLs. When a dog URL is accessed, the supplementary information association component 102 relays the supplementary information 108 to a user as the associated supplementary information 106. The relaying of supplementary information can include, for example, sensory means such as visual *and*/*or* auditory means. It is also possible to incorporate other sensory means such as touch *and*/*or* smell and the like. For example, the fresh scent of flowers could emanate when a "flower"-based URL is accessed *and*/*or* a vibration could occur when an "earthquake"-based URL is accessed. Thus, the supplementary information 108 can include, for example, text, graphics, electrical signals, and sensory signals and the like.

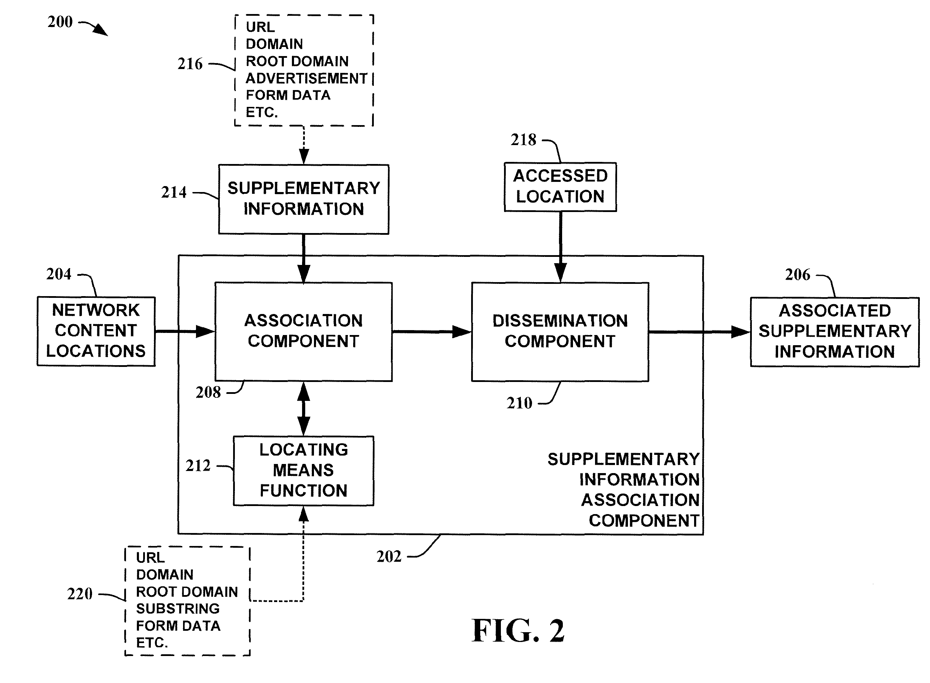

Turning to FIG. 2, another block diagram of a supplementary information association system 200 in accordance with an aspect of the subject invention is depicted. The supplementary information association system 200 is comprised of a supplementary information association component 202 that receives network content locations 204 and provides associated supplementary information 206. The supplementary information association component 202 is comprised of an association component 208 and a dissemination component 210. The association component 208 receives the network content locations 204 and utilizes a locating means function 212 to associate at least one desired content location with supplementary information 214. Although depicted separately, the locating means function 212 can reside within the association component 208. The supplementary information 214 that can be associated with a desired content location can include, for example, information input 216 comprising a URL, a domain, a root domain, an advertisement, and form data and the like. The supplementary information 214 can also include sensory information as detailed *supra.* The supplementary information 214 *and*/*or* some form of the supplementary information 214 is relayed to a user when a desired location is accessed.

The association component 208 utilizes the locating means function 212 to determine the desired content location. The locating means function 212 can include such functions as, for example, substrings of URLs, a key word associated with content of a location, particular form data entered on a Web page associated with a location, all URLs with a particular domain *and*/*or* root domain, *and*/*or* combinations of the preceding and the like. Additional functions are discussed in detail *infra.* A function input 220 is representative of examples of the types of inputs that can be utilized with the locating means function 212. For example, all network content locations 204 that contain particular form data *and*/*or* search query data can be determined, all URLs with a particular substring can be determined, *and*/*or* all locations with a particular domain can be determined and the like. In a simplistic form, the locating means function 212 can produce a single content location such as, for example, a particular URL for an Internet Web page. The dissemination component 210 receives the desired content location and relevant supplementary information from the association component 208. It 210 receives an accessed location 218 and determines if the accessed location 218 represents a desired content location. If so, the supplementary information is relayed to a user as associated supplementary information 206. The relevant supplementary information can be associated with multiple desired locations and can be relayed when any of those locations are accessed.

The subject invention provides instances of systems and methods that allow supplementary information to be associated with content locations on a network. This is particularly useful with networks such as intranets and the Internet. Both of these types of networks utilize similar viewing technologies such as Internet Web browsers. A Web browser allows users to view a "Web page" which is typically information retrieved from a remote network location. The retrieval of the information is performed by a "locating means" employed by the network such as, for example, *via* a domain name *and*/*or* a URL. Thus, users find content on the network by accessing these network content locations *via* the browser. Instances of the subject invention provide a means of associating additional information to an accessed Web page *via* a Web browser.

For example, the additional information or "supplementary information" can include, but is not limited to, online advertisements and the like. An instance of the subject invention can associate advertisements with, for example, specific URLs instead of with keywords found on a Web page. More general associations such as with a domain name, a location + page content, and form data can also be employed by instances of the subject invention. For example, a manufacturer may wish to advertise their new digital camera. Rather than associating the advertisement with keywords like "digital camera," perhaps the manufacturer would like to associate it with particular sites, like www.dpreview.com, or specific URLs like
http://www.dpreview.com/misc/search.asp.

Thus, instances of the subject invention provide opportunities for information dissemination *and*/*or* sources of revenue that are not currently available. For example, a business can advertise its own product alongside a competitor's product such as, for example, the competitor's homepage. Retailers can also advertise their better prices on competitors' Web sites. Thus, instances of the subject invention facilitate in promoting market competition, while providing revenue generating products *and*/*or* services. Additionally, because instances of the subject invention can provide targeted supplementary information (*e.g.*, one could advertise whenever a user is looking at a specific book on a book sellers Web site, checking out a certain movie on a movie distributor's Web site. *etc.),* it can command a higher value than more generic keyword-based information.

### Locating Means

Instances of the subject invention can utilize various types of locating means in determining desired content locations on networks. For example, even with Internet-based locating means, several different types of content location addresses are available. Besides associating supplementary information to a specific URL, for example, other more general locating means can be utilized by instances of the subject invention such as:
- *URL - (e.g.,* http://www.cs.washington.edu/homes/mattr *or* http://www.google. com/search?q=matt)
- *Domain - (e.g.,* www.cs.washington.edu)
- *Root domain - (e.g.,* washington.edu)
- *Locating means + keywords - (e.g.,* URL + "artificial intelligence" or "cats") The keywords, for example, can be words that appear on a web page *and*/*o*r words that are provided *via* a user-labeling of web pages.
- *Locating means + class of a web page - (e.g.,* any page associated with a category under an open directory project)
- *Locating means + content - (e.g.,* any page that begins with "four score and seven years ago... ")
- *Class of a web page - (e.g.,* what category the web page appears in under an open directory project)
- *Form data - (e.g.,* any content location where "98103" is given as the zip code *or* any content location where a search query was entered containing the terms "data" and "mining")
- *Lists of URLs - (e.g.,* one can purchase a collection of "luxury URLs" from a 3^{rd} party)
- *Demographics - (e.g.,* URLs whose visitors are > 70% male and > 50% age 50+, or URLs for which at least 50% of visitors to this URL also visit nba.com within a one month period of visiting that URL)
One skilled in the art can appreciate that other types of networks can employ other locating means not elaborated *supra* but are still within the scope of the subject invention.

### Locating Means Functions

Instances of the subject invention can utilize locating means functions that include, but are not limited to, matching techniques that a user can employ in order to specify what desired content locations that supplementary information is associated with. For example, utilizing an advertisement as the supplementary information that a user wants to associate with, for example, different Web pages, the user can employ different strategies to select the desired Web pages as follows:
1) Exact content location matching (*e.g*., specify a URL like http://www.cnn.com/articles/04532.123).
2) Content location substring matching (*e.g.*, specify a substring of a URL, like "dog" would match http://thedoghouse.com/training.html).
3) Expressions, such as regular expressions *and*/*or* simple wildcard matching "^dog. * [Cc]at$" is a regular expression that can match any URL that begins with "dog" and ends with "cat" or "Cat" "Dog*Cat?" uses wildcards to mean any URL that begins with "Dog," and ends with "Cat" plus one more character.
4) Any of the above matching methods applied only to the domain name instead of a full URL.
5) Any of the above methods used in conjunction with other content location matching methods *(e.g.,* either URL matching *and*/*or* the other methods such as keyword matching, form data matching, *etc.).* For example, matching any URL with "cnn.com" in it, and the content also contains "mississippi."
6) A formula over the above, using logical connectives like "AND," "OR," or "NOT." For example: "substringmatch(dog) and not substringmatch(cat)" can be any URL that contains "dog" but not "cat".
7) Content location collection matching. For example, a set of URLs that match criteria can form a collection. This includes the method in #6 that utilizes an "OR" over a set of exact matches.

Additional methods for "generating" collections of content locations can also be employed by instances of the subject invention. For example, a URL can be specified and matching can be based on that URL or other URLs where the content of the location is similar to the content of the specified URL. In this manner, a list of URLs can be generated that can then be further processed by one or more of the above processes. Collections can also be based on criteria such as, for example, content similarity, Web topology, and query and click behavior and the like. In other instances of the subject invention, a similarity metric can be utilized to facilitate the locating means function. For example, a user can be allowed to specify "how similar" content should be for the purposes of matching. This permits a user, for example, to display an advertisement on any URL that contains the word "dog" and has a similarity greater than, for example, 0.7 with http://petfood.com.

One skilled in the art will appreciate that other locating means such as, for example, domains, root domains, numeric addresses, and other addressing schemes can employ the locating means functions described *supra* and are within the scope of the subject invention. Likewise, other functions that utilize, at least in part, the locating means to provide desired content locations which are not elaborated on *supra* are also employable with the subject invention and fall within its scope as well.

### Relaying Techniques

The supplementary information can be relayed in different manners. The relay method can be based on the type of supplementary information to be conveyed. For example, if the supplementary information is textual *and*/*or* graphical, it can be relayed *via* a window displayed in proximity to accessed content. For example, the supplementary information can be displayed in a "sidebar" to a Web browser as a user is browsing the Web. Similarly, if the supplementary information is audio information, it can be played at the time that a content location is accessed such as, for example, when a Web page is displayed, with or without also displaying textual *and*/*or* graphical information. Other sensory means can be exploited as well such as, for example, if a means is available to provide scent, a fresh flower scent can emanate from a source when a particular Web page is accessed. This can be done for advertisement purposes such as with perfumes *and*/*or* to sell flowers, but can also be done to make a Web user pause longer or shorter on a particular Web page for various reasons (*e.g.*, sweet smell while visiting a business' Web site and a bad odor while visiting a competitor's Web site).

If motion devices are available, vibrations can be initiated whenever, for example, a user visits "earthquake.com." Electrical signals *and*/*or* pulses can also be incorporated into other instances of the subject invention. These types of signals can be used to interact with a user directly (*e.g*., a slight shock to get a user's attention) *and*/*or* indirectly (*e.g.*, turning on a room light, shutting down a computer, turning the room temperature up/down, *etc.)* Utilization of various sensory means can be employed in various combinations such as sight, sound, *and*/*or* motion to increase awareness of products *and*/*or* for entertainment value and the like. One skilled in the art will appreciate that computing technologies and viewing devices for such networks, for example, as the Internet will continually change and other relaying means not discussed *supra* are still within the scope of the subject invention.

Supplementary information utilized by instances of the subject invention can originate from various sources such as, for example, a note from a user *and*/*or* an advertisement from a business and the like. The originating source can be distinguished in some manner in instances of the subject invention to facilitate in obviating where the supplementary information was sourced. Thus, an instance of the subject invention, for example, permits displaying of advertising in particular areas while also displaying notes *and*/*or* chat information from other users regarding a particular network location throughout a user's entire Web browsing experience, optimizing user satisfaction, advertising revenue, and advertisement exposure.

To further the side bar example, instances of the subject invention can utilize a sidebar that is aware of a Web page being displayed in a main Web browser panel and can thus target advertisements based on that knowledge. Revenue can be generated, for example, from advertisers desiring to buy an advertisement for a specific URL - perhaps a manufacturer of fly fishing lures desires to advertise whenever a user visits www.flyfish.com (Of course, the "advertisements" do not have to be advertisements *per se.* A user may wish to associate supplementary information with a Web page and be willing to pay to ensure it appears, *regardless* of whether it is a commercial advertisement or not.).

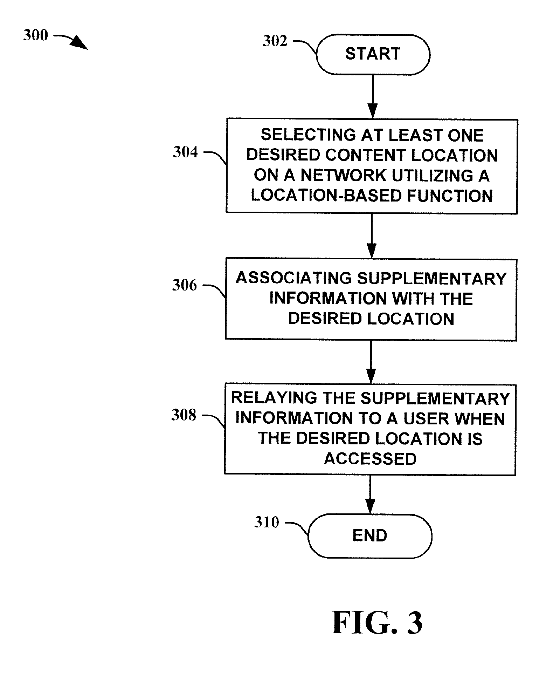

In view of the exemplary systems shown and described above, methodologies that may be implemented in accordance with the subject invention will be better appreciated with reference to the flow charts of FIGs. 3-5. While, for purposes of simplicity of explanation, the methodologies are shown and described as a series of blocks, it is to be understood and appreciated that the subject invention is not limited by the order of the blocks, as some blocks may, in accordance with the subject invention, occur in different orders *and*/*or* concurrently with other blocks from that shown and described herein. Moreover, not all illustrated blocks may be required to implement the methodologies in accordance with the subject invention.

The invention may be described in the general context of computer-executable instructions, such as program modules, executed by one or more components. Generally, program modules include routines, programs, objects, data structures, *etc.,* that perform particular tasks or implement particular abstract data types. Typically, the functionality of the program modules may be combined or distributed as desired in various instances of the subject invention.

In FIG. 3, a flow diagram of a method 300 of facilitating supplementary information association with network content locations in accordance with an aspect of the subject invention is shown. The method 300 starts 302 by selecting at least one desired content location on a network utilizing a location-based function 304. The location can be addressed by a locating means such as, for example, domain, root domain, URL, *and*/*or* other addressing means and the like discussed *supra.* The network itself includes, but is not limited to, an intranet, the Internet, *and*/*or* other types of networks and the like. The location-based function can include functions based on URLs, domains, root domains, *and*/*or* other addressing means and also addressing means in combination with content keywords, search terms, *and*/*or* form data and the like. Supplementary information is then associated with the desired location 306. The desired location can include multiple desired locations as determined by the location-based function *and*/*or* human intervention. The supplementary information itself can include, for example, advertisements, form data, chat information, audio information, video information, *and*/*or* other information and forms of information and the like. The supplementary information is then relayed to a user when the desired location is accessed 308, ending the flow 310. The user can include multiple users *and*/*or* groups of users. Access can be achieved directly *and*/*or* indirectly by a user. The relaying of the supplementary information can include visual, auditory, *and*/*or* other sensory means of information dissemination as well as electrical signals and the like. The supplementary information, for example, can be displayed in a side window next to a Web page browser window.

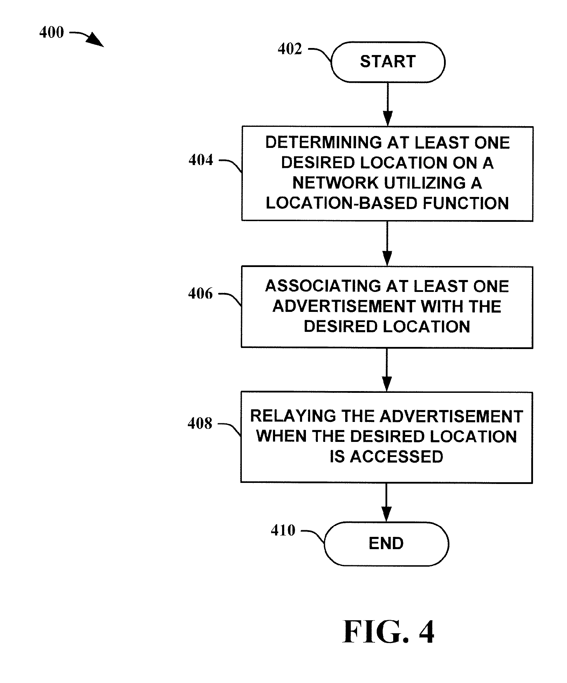

Turning to FIG. 4, a flow diagram of a method 400 of facilitating advertisement association with network content locations in accordance with an aspect of the subject invention is depicted. The method 400 starts 402 by determining at least one desired content location on a network utilizing a location-based function 404. The location can be addressed by a locating means such as, for example, domain, root domain, URL, *and*/*or* other addressing means and the like discussed *supra.* The network itself includes, but is not limited to, an intranet, the Internet, *and*/*or* other types of networks and the like. The location-based function can include functions based on URLs, domains, root domains, *and*/*or* other addressing means and also addressing means in combination with content keywords, search terms, *and*/*or* form data and the like. An advertisement is then associated with the desired location 406. The desired location can include multiple desired locations as determined by the location-based function *and*/*o*r human intervention. The advertisement can include, for example, a textual advertisement, a graphical advertisement, an audio advertisement, a video advertisement, *and*/*or* another type of sensory advertisement or electrical signal and the like. The advertisement is then relayed to a user when the desired location is accessed 408, ending the flow 410. The user can include multiple users *and*/*or* groups of users. Access can be achieved directly *and*/*or* indirectly by a user. The relaying of the advertisement can include visual, auditory, *and*/*or* other sensory means of information dissemination *and*/*or* electrical signals and the like. The advertisement, for example, can be displayed in a side window next to a Web page browser window *and*/*or* played over speakers while a Web page is being viewed and the like.

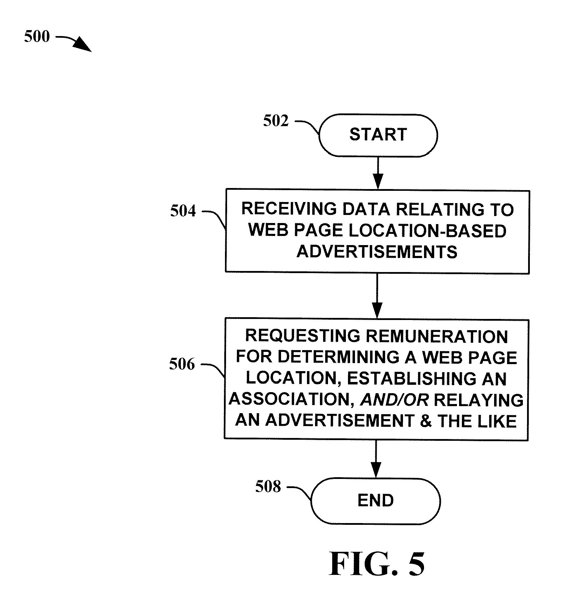

Looking at FIG. 5, a flow diagram of a method 500 of facilitating remuneration for advertisement association with network content locations in accordance with an aspect of the subject invention is illustrated. The method 500 starts 502 by receiving data relating to Web page location-based advertisements 504. The data can include, but is not limited to, type of location-based function, size *and*/*or* type of advertisement, quantity of desired Web page associations, means of relaying the advertisement, *and*/*or* value of associated Web pages and the like. Generally, all data associated with utilizing instantiations of the subject invention can be included in the received data. Remuneration is then requested for determining a Web page location, establishing an association, *and*/*or* relaying an advertisement and the like 506, ending the flow 508. Process steps of instantiations of the subject invention can be valued and priced so that advertisements can be purchased based on any one of the parameters *and*/*or* based on an entire process and the like. Thus, one instance of the subject invention can include a method to purchase advertisements based upon accessing Web page locations. The determination of the value can be determined, for example, by the number of associated Web locations, the size of the advertisement, the type of the advertisement (audio/video, *etc.),* the difficulty in establishing location associations *(e.g.,* complexity of the locating means function, *etc.), and*/*or* the difficulty (*e.g.*, bandwidth usage, *etc.)* of delivering the advertisement and the like. The purchase method can be *via* direct sales *and*/*or* auctions and the like.

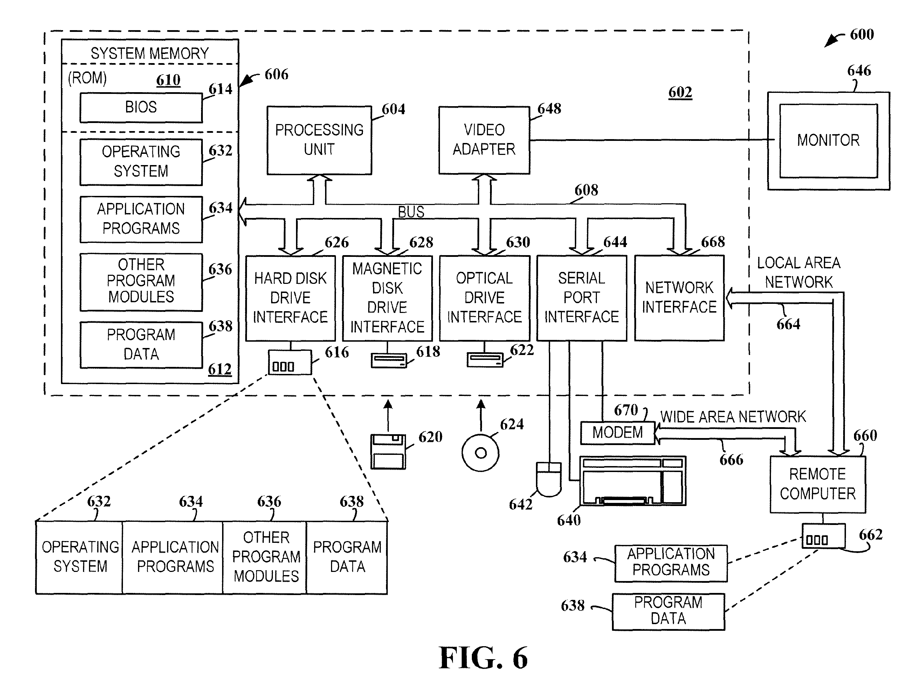

In order to provide additional context for implementing various aspects of the subject invention, FIG. 6 and the following discussion is intended to provide a brief, general description of a suitable computing environment 600 in which the various aspects of the subject invention may be implemented. While the invention has been described above in the general context of computer-executable instructions of a computer program that runs on a local computer *and*/*or* remote computer, those skilled in the art will recognize that the invention also may be implemented in combination with other program modules. Generally, program modules include routines, programs, components, data structures, *etc.,* that perform particular tasks *and*/*or* implement particular abstract data types. Moreover, those skilled in the art will appreciate that the inventive methods may be practiced with other computer system configurations, including single-processor or multi-processor computer systems, minicomputers, mainframe computers, as well as personal computers, hand-held computing devices, microprocessor-based *and*/*or* programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand-alone computers. In a distributed computing environment, program modules may be located in local *and*/*or* remote memory storage devices.

As used in this application, the term "component" is intended to refer to a computer-related entity, either hardware, a combination of hardware and software, software, or software in execution. For example, a component may be, but is not limited to, a process running on a processor, a processor, an object, an executable, a thread of execution, a program, and a computer. By way of illustration, an application running on a server *and*/*or* the server can be a component. In addition, a component may include one or more subcomponents.

With reference to FIG. 6, an exemplary system environment 600 for implementing the various aspects of the invention includes a conventional computer 602, including a processing unit 604, a system memory 606, and a system bus 608 that couples various system components, including the system memory, to the processing unit 604. The processing unit 604 may be any commercially available or proprietary processor. In addition, the processing unit may be implemented as multi-processor formed of more than one processor, such as may be connected in parallel.

The system bus 608 may be any of several types of bus structure including a memory bus or memory controller, a peripheral bus, and a local bus using any of a variety of conventional bus architectures such as PCI, VESA, Microchannel, ISA, and EISA, to name a few. The system memory 606 includes read only memory (ROM) 610 and random access memory (RAM) 612. A basic input/output system (BIOS) 614, containing the basic routines that help to transfer information between elements within the computer 602, such as during start-up, is stored in ROM 610.

The computer 602 also may include, for example, a hard disk drive 616, a magnetic disk drive 618, e.g., to read from or write to a removable disk 620, and an optical disk drive 622, *e.g.,* for reading from or writing to a CD-ROM disk 624 or other optical media. The hard disk drive 616, magnetic disk drive 618, and optical disk drive 622 are connected to the system bus 608 by a hard disk drive interface 626, a magnetic disk drive interface 628, and an optical drive interface 630, respectively. The drives 616-622 and their associated computer-readable media provide nonvolatile storage of data, data structures, computer-executable instructions, etc. for the computer 602. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, can also be used in the exemplary operating environment 600, and further that any such media may contain computer-executable instructions for performing the methods of the subject invention.

A number of program modules may be stored in the drives 616-622 and RAM 612, including an operating system 632, one or more application programs 634, other program modules 636, and program data 638. The operating system 632 may be any suitable operating system or combination of operating systems. By way of example, the application programs 634 and program modules 636 can include an information association scheme in accordance with an aspect of the subject invention.

A user can enter commands and information into the computer 602 through one or more user input devices, such as a keyboard 640 and a pointing device (*e.g*., a mouse 642). Other input devices (not shown) may include a microphone, a joystick, a game pad, a satellite dish, a wireless remote, a scanner, or the like. These and other input devices are often connected to the processing unit 604 through a serial port interface 644 that is coupled to the system bus 608, but may be connected by other interfaces, such as a parallel port, a game port or a universal serial bus (USB). A monitor 646 or other type of display device is also connected to the system bus 608 *via* an interface, such as a video adapter 648. In addition to the monitor 646, the computer 602 may include other peripheral output devices (not shown), such as speakers, printers, *etc.*

It is to be appreciated that the computer 602 can operate in a networked environment using logical connections to one or more remote computers 660. The remote computer 660 may be a workstation, a server computer, a router, a peer device or other common network node, and typically includes many or all of the elements described relative to the computer 602, although for purposes of brevity, only a memory storage device 662 is illustrated in FIG. 6. The logical connections depicted in FIG. 6 can include a local area network (LAN) 664 and a wide area network (WAN) 666. Such networking environments are commonplace in offices, enterprise-wide computer networks, intranets and the Internet.

When used in a LAN networking environment, for example, the computer 602 is connected to the local network 664 through a network interface or adapter 668. When used in a WAN networking environment, the computer 602 typically includes a modem (*e.g*., telephone, DSL, cable, *etc.*) 670, or is connected to a communications server on the LAN, or has other means for establishing communications over the WAN 666, such as the Internet. The modem 670, which can be internal or external relative to the computer 602, is connected to the system bus 608 *via* the serial port interface 644. In a networked environment, program modules (including application programs 634) *and*/*or* program data 638 can be stored in the remote memory storage device 662. It will be appreciated that the network connections shown are exemplary and other means (*e.g.*, wired or wireless) of establishing a communications link between the computers 602 and 660 can be used when carrying out an aspect of the subject invention.

In accordance with the practices of persons skilled in the art of computer programming, the subject invention has been described with reference to acts and symbolic representations of operations that are performed by a computer, such as the computer 602 or remote computer 660, unless otherwise indicated. Such acts and operations are sometimes referred to as being computer-executed. It will be appreciated that the acts and symbolically represented operations include the manipulation by the processing unit 604 of electrical signals representing data bits which causes a resulting transformation or reduction of the electrical signal representation, and the maintenance of data bits at memory locations in the memory system (including the system memory 606, hard drive 616, floppy disks 620, CD-ROM 624, and remote memory 662) to thereby reconfigure or otherwise alter the computer system's operation, as well as other processing of signals. The memory locations where such data bits are maintained are physical locations that have particular electrical, magnetic, or optical properties corresponding to the data bits.

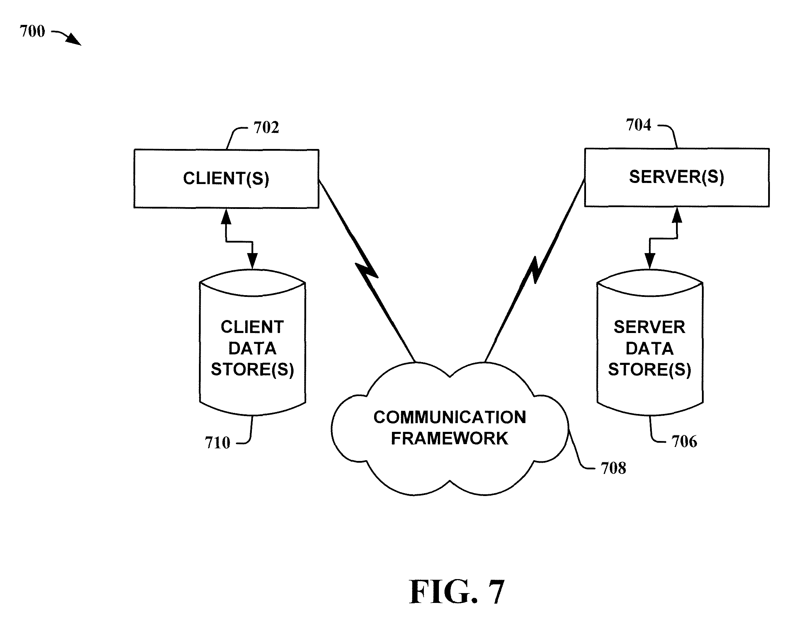

FIG. 7 is another block diagram of a sample computing environment 700 with which the subject invention can interact. The system 700 further illustrates a system that includes one or more client(s) 702. The client(s) 702 can be hardware *and*/*or* software (*e.g.*, threads, processes, computing devices). The system 700 also includes one or more server(s) 704. The server(s) 704 can also be hardware *and*/*or* software *(e.g.,* threads, processes, computing devices). One possible communication between a client 702 and a server 704 may be in the form of a data packet adapted to be transmitted between two or more computer processes. The system 700 includes a communication framework 708 that can be employed to facilitate communications between the client(s) 702 and the server(s) 704. The client(s) 702 are connected to one or more client data store(s) 710 that can be employed to store information local to the client(s) 702. Similarly, the server(s) 704 are connected to one or more server data store(s) 706 that can be employed to store information local to the server(s) 704.

It is to be appreciated that the systems *and*/*or* methods of the subject invention can be utilized in information association facilitating computer components and non-computer related components alike. Further, those skilled in the art will recognize that the systems *and*/*or* methods of the subject invention are employable in a vast array of electronic related technologies, including, but not limited to, computers, servers *and*/*or* handheld electronic devices, and the like.

What has been described above includes examples of the subject invention. It is, of course, not possible to describe every conceivable combination of components or methodologies for purposes of describing the subject invention, but one of ordinary skill in the art may recognize that many further combinations and permutations of the subject invention are possible. Accordingly, the subject invention is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates information association with network-based content locations, comprising:
an association component that associates supplementary information with at least one desired content location for a network-based system; the desired content location determined *via* a function of a content locating means; and
a dissemination component that relays the supplementary information to a user when the desired content location is accessed.

2. The system of claim 1, the dissemination component relays the supplementary information to the user audibly *and*/*or* visually.

3. The system of claim 1, the content location comprising a location of, at least in part, content associated with a World Wide Web page.

4. The system of claim 1, the content locating means comprising an addressing means for a global communication system.

5. The system of claim 4, the addressing means comprising a domain name *and*/*or* a domain numeric location.

6. The system of claim 1, the network-based system comprising an intranet *and*/*or* the Internet.

7. The system of claim 1, the supplementary information comprising chat information, form data, an inducement to purchase *and*/*or* sell, an inducement to utilize *and*/*or* abstain from a service, *and*/*or* a representation to increase brand awareness.

8. The system of claim 1, the function of the content locating means comprising a function based on an Internet Universal Resource Locator (URL).

9. The system of claim 8, the function comprising an exact URL matching function, a URL substring matching function, an expression function, a content matching function, a form data matching function, *and*/*or* a URL collection generating function.

10. A system that facilitates purchasing advertising associated with a content location utilizing, at least in part, the system of claim 1.

11. A method for facilitating advertisement association with network content locations, comprising:
determining at least one desired content location on a network utilizing a location-based function;
associating at least one advertisement with the desired content location; and
relaying the advertisement when the desired content location is accessed.

12. The method of claim 11, the network comprising an intranet *and*/*or* the Internet.

13. The method of claim 11, the content location comprising an Internet Web page address.

14. The method of claim 11 further comprising:
displaying the advertisement *via* a side window associated with content relating to the desired location.

15. The method of claim 11 further comprising:
employing a location-based function to determine the desired location; the function utilizing exact content location matching, content location substring matching, content location expression determination, *and*/*or* content location collection generation.

16. The method of claim 11, the desired location comprising a domain, a root domain, *and*/*or* a Universal Resource Locator (URL).

17. A method of purchasing advertisements utilizing, at least in part, the method of claim 11.

18. A system that facilitates information association with network-based content locations, comprising:
means for associating supplementary information with at least one desired content location for a network-based system; the desired content location determined *via* a function of a content locating means; and
means for relaying the supplementary information to a user when the desired location is accessed.

19. An Internet web browser employing the method of claim 11.

20. A device employing the system of claim 1 comprising at least one selected from the group consisting of a computer, a server, and a handheld electronic device.
